# EUROPEAN PATENT APPLICATION

(11) **EP 4 617 213 A1**
(43) Date of publication of application: **17.09.2025**
(21) Application number: 23888917.4
(22) Date of filing: 22.09.2023
(51) Int. Cl.: B65H 23/025, B65H 23/34, H01M 4/04, G06T 7/11, G06T 7/13, G06T 7/62, G06V 10/25

(54) **APPARATUS AND METHOD FOR REMOVING WRINKLES FROM SHEET MATERIAL**

(30) Priority: 09.11.2022 KR 20220148715
(71) Applicant: Haewon T&D Co., Ltd., Busan 46976 (KR)
(72) Inventor: HYUN, Ki Woong, Hwaseong-si, Gyeonggi-do 18514 (KR); AHN, Kwang Ho, Hwaseong-si, Gyeonggi-do 18514 (KR); OH, Joo Sung, Hwaseong-si, Gyeonggi-do 18514 (KR)
(74) Representative: Vossius & Partner Patentanwälte Rechtsanwälte mbB
(86) International application number: PCT/KR2023/014476
(87) International publication number: WO 2024/101653

(57) **Abstract**

According to the present invention, provided is an apparatus for removing wrinkles from a sheet material, comprising: an expander roll that rotates in a bent state with respect to a rotation axis bent to straighten and remove wrinkles formed in a sheet material being transferred to be wrinkle-removed; a roll bender that generates a bending moment to bend the expander roll; a roll rotator that rotates the expander roll; a roll controller that controls the operation of the roll bender and the roll rotator; a vision camera that photographs one surface of the sheet material being wrinkle-removed, so as to generate an input image; and a wrinkle detection module that detects wrinkles in the sheet material to be detected, using the input image, wherein the wrinkle detection module includes a quantification unit that quantifies the level of wrinkles formed in the sheet material being detected and produces wrinkle level information, and the roll controller adjusts, in response to the wrinkle level information, the degree of bending of the expander roll and a rotation position of the expander roll.

## Description

### Technical field

The present invention relates to sheet material processing technology, and an apparatus and method for removing wrinkles from a sheet material.

### Background art

A sheet material such as an electrode sheet for a secondary battery is generally processed and manufactured during the process of winding the sheet material from a winding roll and transferring the sheet material. While the sheet material is transferred, wrinkles are often formed in the sheet material, and the wrinkles formed in the sheet material deteriorates the quality of the sheet material. Thus, it is necessary to remove wrinkles formed in the sheet material during the transfer process, and to this end, an expander roll is generally used. The expander roll is a roll having a gently bent shape, and the sheet material with the wrinkles is expanded while passing through the expander roll so that the wrinkles formed in the sheet material are straightened.

Korean Patent Registration No. 10-2345768, which is a prior patent document related to the present invention, discloses a configuration for adjusting, in response to this, the curvature of an expander roll when wrinkles are recognized from sheet goods by using a wrinkle detection sensor. However, according to the related art, the curvature of the expander roll is adjusted by recognizing the generation of wrinkles so that there is a limitation in removing the wrinkles more finely depending on the formation degree of the wrinkles.

### Detailed description of the invention

### Technical problem

The present invention provides an apparatus and method for removing wrinkles from a sheet material, whereby wrinkles may be effectively removed from the sheet material in response to the formation degree of the wrinkles.

### Technical solution

According to an aspect of the present invention, there is provided an apparatus for removing wrinkles from a sheet material, the apparatus including: an expander roll that rotates in a bent state with respect to a rotation axis bent to straighten and remove wrinkles formed in a sheet material being transferred to be wrinkle-removed, while supporting the sheet material to be wrinkle-removed; a roll bender that generates a bending moment to bend the expander roll; a roll rotator that rotates the expander roll; a roll controller that controls an operation of the roll bender and the roll rotator; a vision camera that photographs one surface of the sheet material being wrinkle-removed, so as to generate an input image; and a wrinkle detection module that detects wrinkles in the sheet material to be detected, using the input image, wherein the wrinkle detection module includes a region of interest (ROI) confirmation unit that confirms an ROI from the input image to generate a confirmed ROI image, an analyzing unit that generates image analysis information from the confirmed ROI image, and a quantification unit that quantifies the level of wrinkles formed in the sheet material being detected and produces wrinkle level information, and the roll controller adjusts, in response to the wrinkle level information, a bending degree of the expander roll and a rotation position of the expander roll.

According to another embodiment of the present invention, there is provided a method for removing wrinkles from a sheet material, the method including: an input image generation operation in which a vision camera generates an input image by photographing one surface of a sheet material being transferred to be wrinkle-removed; a region of interest (ROI) confirmation operation in which a wrinkle detection module generates a confirmed ROI image by confirming an ROI from the input image; an analyzing operation in which the wrinkle detection module generates image analysis information from the confirmed ROI image; a quantification operation in which the wrinkle detection module quantifies a level of wrinkles formed in the sheet material to be wrinkle-removed, using the image analysis information to generate wrinkle level information; and an expander roll controlling operation in which a bent degree and a rotation position of an expander roll that rotates in a bent state with respect to a rotation axis bent to straighten and remove wrinkles formed in a sheet material being transferred to be wrinkle-removed, while supporting the sheet material to be wrinkle-removed, are controlled by a roll controller in response to the wrinkle level information.

### Effects of the invention

According to the present invention, all of the objectives of the present invention described above can be achieved. Specifically, since the present invention determines the degree of wrinkles formed in a sheet material to be detected and adjusts, in response to that, a bending degree and a rotation angle of an expander roll, the wrinkles formed in the sheet material can be more effectively removed compared to the related art.

### Description of the drawings

FIG. 1 is a perspective view illustrating equipment for processing a sheet material including an apparatus for removing wrinkles from the sheet material according to an embodiment of the present invention.
FIG. 2 is a view illustrating a configuration of the apparatus for removing wrinkles from the sheet material in the equipment for processing a sheet material shown in FIG. 1.
FIG. 3 is a plan view illustrating an expander roll in the equipment for processing a sheet material shown in FIG. 1.
FIG. 4 is a block diagram illustrating a configuration of a wrinkle detection module shown in FIG. 2.
FIG. 5 is a flowchart schematically illustrating a method for removing wrinkles from a sheet material according to an embodiment of the present invention using the apparatus for removing wrinkles from a sheet material shown in FIG. 2.
FIGS. 6 through 18 are views illustrating a state in which each of operations of the method for removing wrinkles from a sheet material shown in FIG. 5 is performed.

### Mode of the invention

Hereinafter, the configuration and action of the present invention will be described in detail by describing embodiments of the present invention with reference to the accompanying drawings.

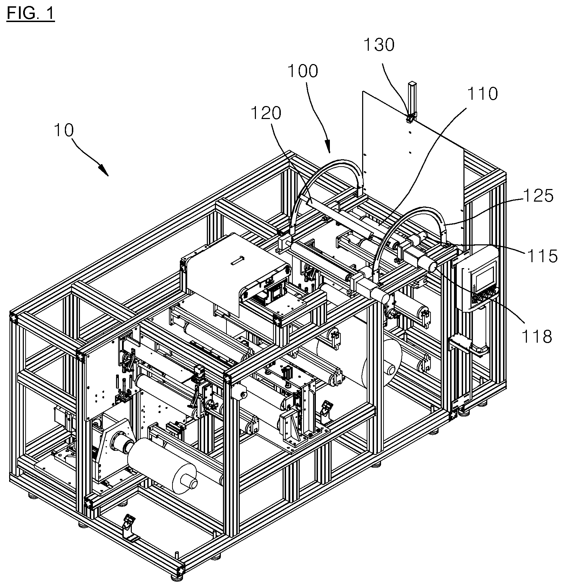

FIG. 1 is a perspective view illustrating equipment for processing a sheet material including an apparatus for removing wrinkles from the sheet material according to an embodiment of the present invention. Referring to FIG. 1, in equipment 10 for processing a sheet material that is an apparatus for manufacturing desired goods of the sheet material by processing the sheet material, the sheet material is transferred and processed along a plurality of rollers. The equipment 10 for processing the sheet material includes an apparatus 100 for removing wrinkles from the sheet material according to an embodiment of the present invention.

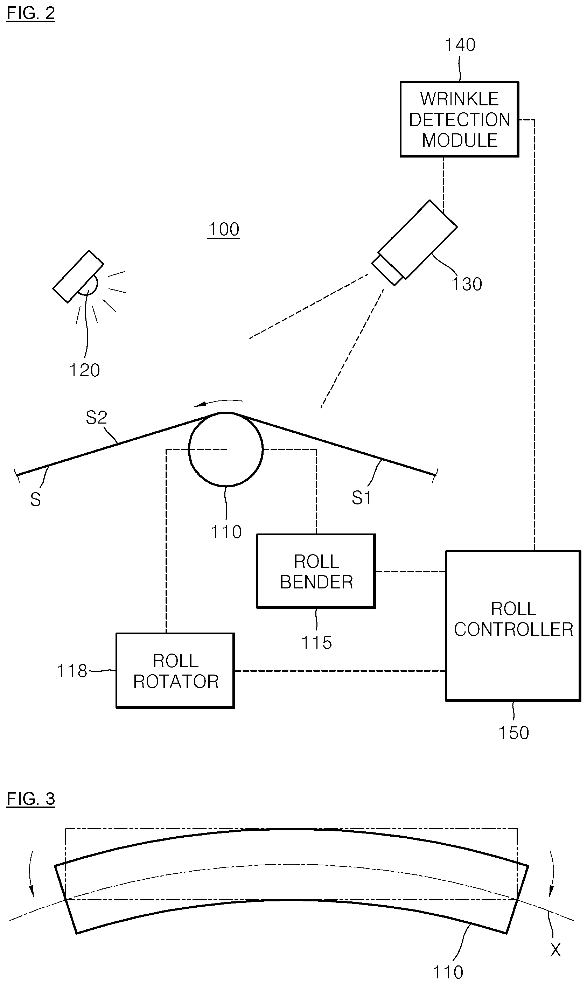

FIG. 2 illustrates a schematic configuration of the apparatus 100 for removing wrinkles from the sheet material. Referring to FIGS. 1 and 2, the apparatus 100 for removing wrinkles from the sheet material includes an expander roll 110 that straightens and removes the wrinkles formed in a sheet material S to be wrinkle-removed, while supporting the sheet material S to be wrinkle-removed, a roll bender 115 that generates a bending moment for adjusting a bending degree of the expander roll 110, a roll rotator 118 that rotates a rotation axis of the expander roll 110, a lighting light source 120 that shines light on the sheet material S to be wrinkle-removed, a vision camera 130 that obtains an image of the sheet material S to be wrinkle-removed, a wrinkle detection module 140 that detects the wrinkles formed in the sheet material S to be wrinkle-removed, using the image of the sheet material S to be wrinkle-removed obtained by the vision camera 130, and a roll controller 150 that controls the operation of the roll bender 115 and the roll rotator 118 using wrinkle detection information transmitted from the wrinkle detection module 140.

The expander roll 110 straightens and removes the wrinkles formed in the sheet material S to be wrinkle-removed, while supporting the transferred sheet material S to be wrinkle-removed. The expander roll 110 supports the sheet material S to be wrinkle-removed, by making contact with a surface of the sheet material S. The sheet material S is in close contact with an outer circumferential surface of the expander roll 110 over a certain angle section. In the present embodiment, a surface of both surfaces S1 and S2 of the sheet material S to be wrinkle-removed is in direct contact with the expander roll 110, is referred to as a roll contact surface S1, and the other surface thereof is referred to as a roll non-contact surface S2. The expander roll 110 is rotated manually by transferring the sheet material S to be wrinkle-removed. FIG. 3 is a plan view of the expander roll 110. Referring to FIG. 3, the expander roll 110 is bent with respect to a rotation axis X and straightens and removes the wrinkles formed in the sheet material (S of FIG. 2) to be wrinkle-removed that passes through the expander roll 110. The shape shown in a dashed line in FIG. 3 shows a state in which the expander roll 110 extends in a straight line and is not bent. By a bending moment generated by a roll bender (115 of FIGS. 1 and 2) from a unbent state shown in the dashed line, the expander roll 110 is maintained in a bent state, as shown. In a state in which the expander roll 110 is bent, the rotation axis X is rotated by the roll rotator 118. The expander roll 110 may be of a general configuration used to remove wrinkles from the sheet material, and for example, of a configuration disclosed in Korean Patent Registration No. 1952266. The expander roll 110 is placed opposite to the lighting light source 120 and the vision camera 130 with the sheet material S to be wrinkle-removed, therebetween.

The roll bender 115 generates a bending moment by applying force to the expander roll 110 so that the expander roll 110 may be bent. The bending degree of the expander roll 110 is adjusted by the roll bender 115. In the present embodiment, it will be described that the roll bender 115 pressurizes an end part of the expander roll 110 laterally to generate a bending moment and includes a pressurization motor for generating a bending moment. It will be described that the operation of the pressurization motor provided at the roll bender 115 is controlled by the roll controller 150 so that the bending moment generated by the roll bender 115 is adjusted.

The roll rotator 118 rotates the rotation axis X of the expander roll 110 to adjust a rotation position of the expander roll 110. The roll rotator 118 includes a rotation position adjustment motor for rotating the rotation axis X of the expander roll 110, and the operation of the rotation position adjustment motor is controlled by the roll controller 150.

The lighting light source 120 shines light on the sheet material S to be wrinkle-removed, so as to obtain the image of the sheet material S to be wrinkle-removed, using the vision camera 130. The lighting light source 120 is placed opposite to the expander roll 110 with the sheet material S to be wrinkle-removed, therebetween, and shines light on the roll non-contact surface S2 of the sheet material S to be wrinkle-removed. In the present embodiment, it will be described that the lighting light source 120 is placed downstream from the expander roll 110 in a transfer direction of the sheet material S to be wrinkle-removed, indicated by arrows and shines light on the expander roll 110, but the present invention is not limited thereto. The position of the lighting light source 120 may be changed as needed. To this end, in the present embodiment, a movement guide 125 for moving the lighting light source 120 in a circumferential direction from the expander roll 110 may be further provided.

The vision camera 130 obtains the image of the sheet material S to be wrinkle-removed, required for wrinkle detection. The image of the sheet material S to be wrinkle-removed, obtained by the vision camera 130 is transmitted to the wrinkle detection module 140 in real time. The vision camera 130 is placed opposite to the expander roll 110 with the sheet material S to be wrinkle-removed, therebetween, thereby photographing the roll non-contact surface S2 of the sheet material S to be wrinkle-removed, in real time. The vision camera 130 is placed upstream from the expander roll 110 in the transfer direction of the sheet material S to be wrinkle-removed, indicated by arrows and photographs the expander roll 110. The sheet material S to be wrinkle-removed, photographed by the vision camera 130 includes a portion that contacts the expander roll 110 over the entire width of the sheet material S to be wrinkle-removed, a part of an upstream side of the portion contacting the expander roll 110, and a part of a downstream side of the portion contacting the expander roll 110.

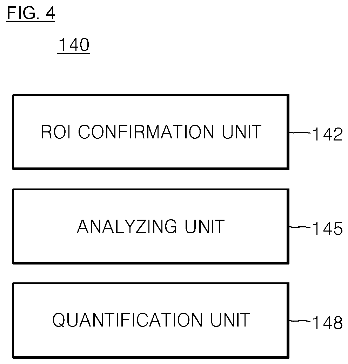

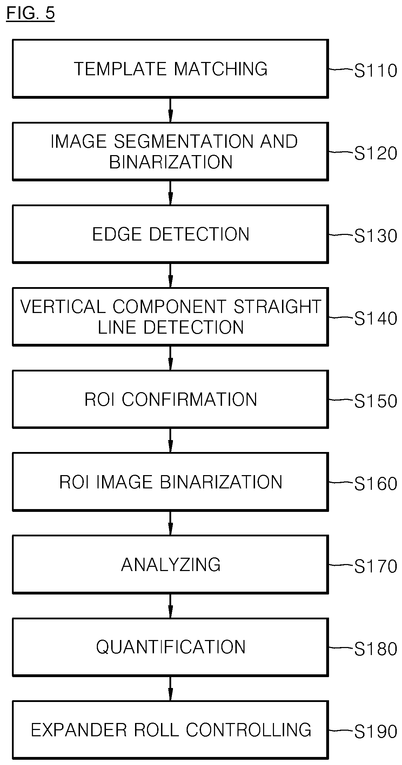

The wrinkle detection module 140 detects the wrinkles formed in the sheet material S to be wrinkle-removed, using the image of the sheet material S to be wrinkle-removed, obtained by the vision camera 130 in real time. FIG. 4 is a block diagram illustrating a schematic configuration of the wrinkle detection module 140. Referring to FIG. 4, the wrinkle detection module 140 includes a region of interest (ROI) confirmation unit 142 that confirms an ROI in which wrinkles are detected from the input image obtained from the vision camera 130, an analyzing unit 145 that detects the wrinkles by analyzing an image of the ROI confirmed by the ROI confirmation unit 142, and a quantification unit 148 that quantifies the wrinkles using the ROI image analyzed by the analyzing unit 145. The action of the wrinkle detection module 140 will be described in detail with the method for removing wrinkles from the sheet material shown in FIG. 5.

Referring to FIG. 2, the roll controller 150 controls the operation of the roll bender 115 and the roll rotator 118 using wrinkle detection information transmitted from the wrinkle detection module 140. The roll controller 150 adjusts the bending degree of the expander roll 110 and a rotation position (angle) in a state in which the expander roll 110 is bent, in response to the degree (number and size) of the wrinkles formed in the sheet material S to be wrinkle-removed. The roll controller 150 adjusts the bending degree and the rotation position of the expander roll 110 so that, the higher the degree of the wrinkles formed in the sheet material S to be wrinkle-removed, the larger the width expanding while the roll controller 150 passes through the expander roll 110. The action of the roll controller 150 will be described in detail with the method for removing wrinkles from the sheet material shown in FIG. 5.

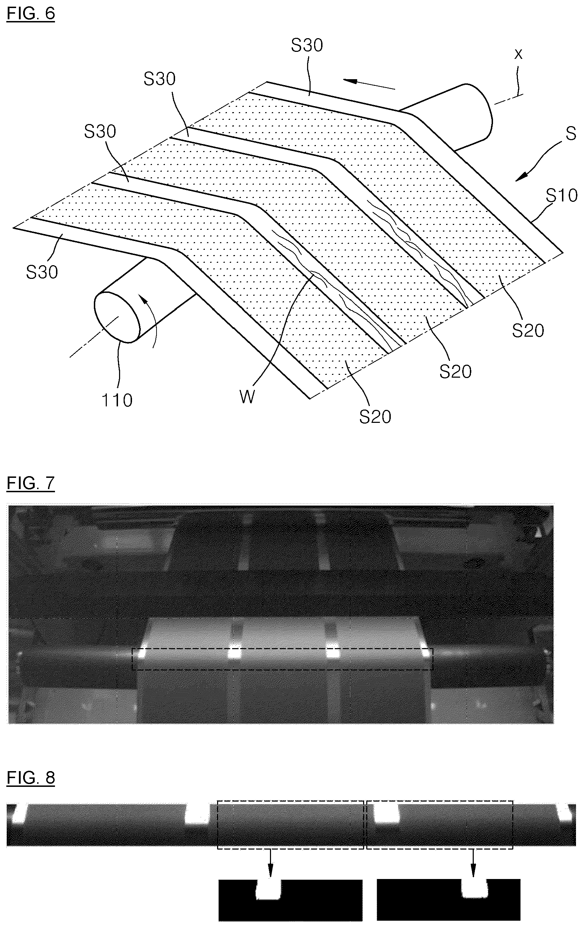

FIG. 5 is a flowchart of a schematic configuration of a method for detecting wrinkles from a sheet material according to an embodiment of the present invention. Referring to FIG. 5, the method for removing wrinkles from a sheet material according to an embodiment of the present invention includes a template matching operation (S110), an image segmentation and binarization operation (S120), an edge detection operation (S130), a vertical component straight line detection operation (S140), an ROI confirmation operation (S150), an ROI image binarization operation (S160), an analyzing operation (S170), a quantifying operation (S180), and an expander roll controlling operation (S190). The template matching operation (S110), the image segmentation and binarization operation (S120), the edge detection operation (S130), the vertical component straight line detection operation (S140), the ROI confirmation operation (S150), the ROI image binarization operation (S160), the analyzing operation (S170), and the quantifying operation (S180) constitute a wrinkle detection operation of detecting wrinkles formed in the sheet material. Hereinafter, each of operations of the method shown in FIG. 5 will be described in detail by taking the case where wrinkles formed in an electrode sheet for a secondary battery are detected using the apparatus 100 for removing wrinkles from the sheet material described with reference to FIGS. 1 through 4, as an example. FIG. 6 illustrates an electrode sheet that is supported and transferred by the expander roll 110. Referring to FIG. 6, an electrode sheet S that is a sheet to be detected, includes an electrode current collector S10, and a plurality of coating layers S20 formed by coating an active material on the electrode current collector S10. The plurality of coating layers S20 are sequentially spaced apart from each other in a widthwise direction and are formed on the roll non-contact surface of the electrode current collector S10. Thus, a plurality of plain portions S30 in which the coating layers S20 are not formed, are spaced apart from each other in the widthwise direction and are formed on the roll non-contact surface of the electrode current collector S30. Wrinkles W are likely to form in the plain portions S30.

In the template matching operation (S110), a template image is detected from the input image obtained from the vision camera 130. The template matching operation (S110) is performed by setting a detection area by matching the input image obtained by the vision camera (130 of FIG. 2) with a registered template image by using the ROI confirmation unit (142 of FIG. 4) of the wrinkle detection module (140 of FIG. 2). FIG. 7 is a photo showing an example in which the template matching operation (S110) is performed and the template image is detected. In FIG. 7, the entire image is the input image obtained from the vision camera 130, and a template image in which the inside of a dashed line is detected. After the template matching operation (S110) is performed and the template image is detected, the image segmentation and binarization operation (S120) is performed.

In the image segmentation and binarization operation (S120), an object in an area in which wrinkles are detected, is separated from the template image detected through the template matching operation (S110), and an image of the separated area is binarized and is converted into a binary image. The image segmentation and binarization operation (S120) is performed by the ROI confirmation unit (142 of FIG. 4) of the wrinkle detection module (140 of FIG. 2). FIG. 8 is a photo showing an example in which the image segmentation and binarization operation is performed on the template image of FIG. 7. In FIG. 8, the inside of a dashed line is an area separated from the template image, and a photo below is a separated area binary image generated in response to this. After the image segmentation and binarization operation (S120) is performed and the separation area binary image is generated, the edge detection operation (S130) is performed.

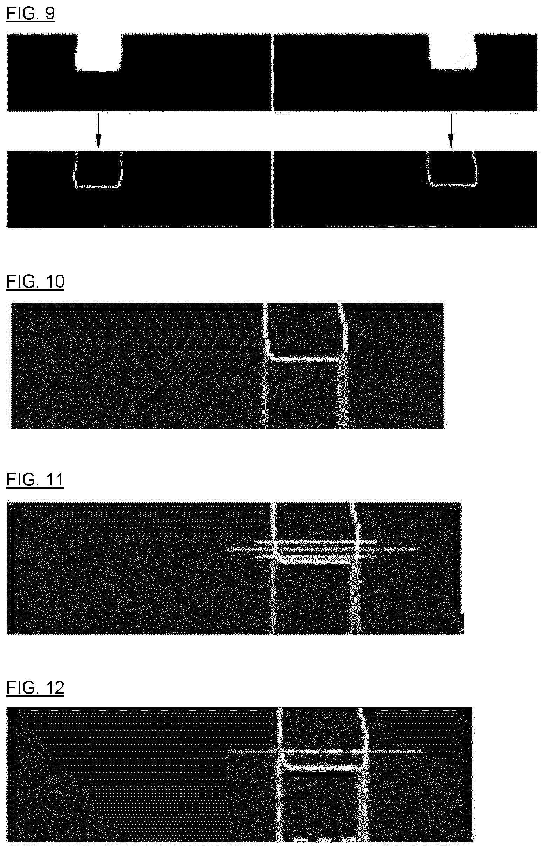

In the edge detection operation (S130), an edge pixel is extracted from the separation area binary image generated through the image segmentation and binarization operation (S120). The edge detection operation (S130) may be performed using a Hysteresis Thresholding technique that is an image processing algorithm by the ROI confirmation unit (142 of FIG. 4) of the wrinkle detection module (140 of FIG. 2). FIG. 9 is a photo showing an example in which the edge detection operation (S130) is performed on the separation area binary image shown in FIG. 8 and an edge pixel is extracted. Two photos below of FIG. 9 that are an edge detection image generated through the edge detection operation (S130) represent an edge from which a white line of the edge detection image is extracted. After the edge detection operation (S130) is performed and the edge pixel is extracted, the vertical component straight line detection operation (S140) is performed.

In the vertical component straight line generation operation (S140), a vertical component straight line is generated using the edge detected through the edge detection operation (S130). The vertical component straight line generated in the vertical component straight line generation operation (S140) refers to two straight lines corresponding to both ends of a plain portion (S30 of FIG. 6), which are connected by a straight line to an edge detected through the edge detection operation in the edge detection image that is two images below of FIG. 9. The vertical component straight line generation operation (S140) is performed by the ROI confirmation unit (142 of FIG. 4) of the wrinkle detection module (140 of FIG. 2). FIG. 10 shows an image in which the vertical component straight line generation operation (S140) is performed and vertical component straight lines are generated. Two straight lines placed at both ends of three straight lines extending from the edge to vertically downwards in FIG. 10 are the generated vertical component straight lines. The vertical component straight lines are two vertically extending straight lines that pass through the most edge pixels. That is, the two vertical component straight lines are line segments formed by extending from each of the upper two straight lines to the outside of the edge pixels in the order in which the two vertical component straight lines extend along the transfer direction of the sheet material S to be detected and passing through many edge pixels. After the vertical component straight line generation (S140) is performed and two vertical component straight lines are generated, the ROI confirmation operation (S150) is performed.

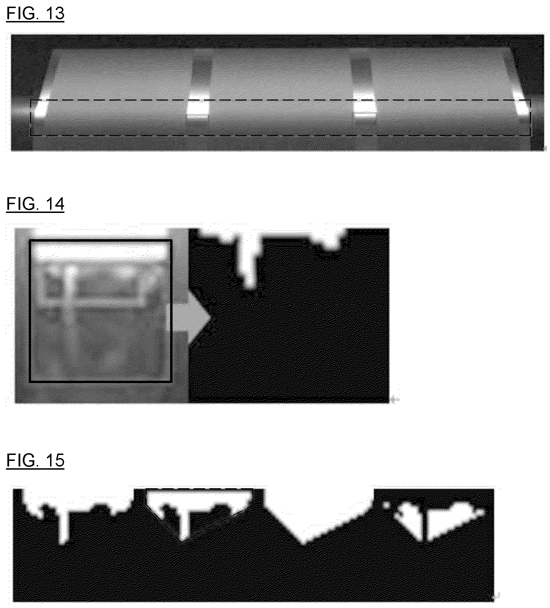

In the ROI confirmation operation (S150), an ROI is confirmed by the ROI confirmation unit (142 of FIG. 4) of the wrinkle detection module (140 of FIG. 2). FIGS. 11 and 12 illustrate an image sequentially showing a procedure in which the ROI confirmation operation (S150) is performed. First, as shown in FIG. 11, an average line is generated. Referring to FIG. 11, three line segments extending in a horizontal direction are added to the state shown in FIG. 10. The average line is a line segment placed in the middle among three line segments extending in the horizontal direction in FIG. 11. The average line is a horizontal component straight line passing through an average coordinate value of vertical coordinate values at an upper end (a point where the two vertical component straight lines meet an edge) of two vertical component straight lines. That is, the average line refers to a straight line passing through the center between two points where each of two vertical component straight lines meets the edge pixel while forming a right angle in a transfer direction of the sheet material S to be detected. After the average line is generated, as shown in FIG. 11, the ROI indicated by the dashed line in FIG. 12 is confirmed. Referring to FIG. 12, the confirmed ROI is an area surrounded by the average line, two vertical extending straight lines, and edge lines. FIG. 13 shows that the template image and the confirmed ROI image are indicated in the input image. In FIG. 13, the entire image is an input image, and the inner area of the dashed line is a template image, and areas inside the solid rectangle are the confirmed ROI image. After the ROI is confirmed through the ROI confirmation operation (S150), the ROI image binarization operation (S160) is performed.

In the ROI image binarization operation (S160), the ROI confirmation operation (S150) is performed, and the generated confirmed ROI image is binarized. The ROI image binarization operation (S160) is performed by the analyzing unit (145 of FIG. 4) of the wrinkle detection module (140 of FIG. 2). FIG. 14 shows a state in which the ROI image binarization operation (S160) is performed. In FIG. 14, the left image is the confirmed ROI image (an area inside a solid rectangle), and the right image is an ROI binarization image. After the ROI binarization image is generated through the ROI image binarization operation (S160), the analyzing operation (S170) is performed.

In the analyzing operation (S170), analysis on the ROI binarization image generated through the ROI image binarization operation (S160) is performed. The ROI image binarization operation (S160) is performed by the analyzing unit (145 of FIG. 4) of the wrinkle detection module (140 of FIG. 2). In the analyzing operation (S170), information such as a white pixel count, a shape and the like of the ROI binarization image are analyzed. FIG. 15 shows an example in which analysis on the ROI binarization image is performed through the analyzing operation (S170). After analysis on the ROI binarization image is performed through the analyzing operation (S170), the quantifying operation (S180) is performed.

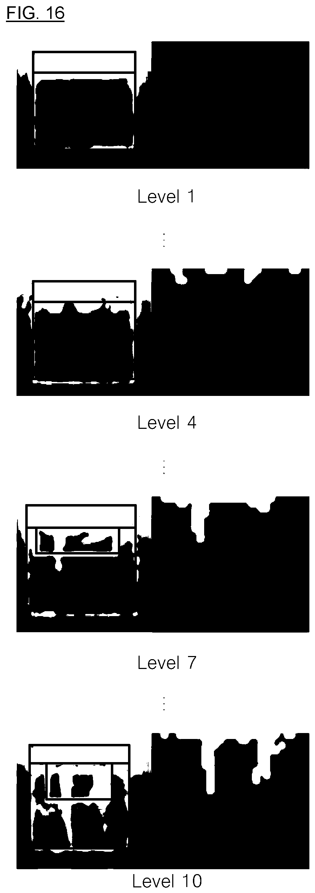

In the quantifying operation (S180), wrinkles are quantified based on the information (the number and size of wrinkles) about the ROI binarization image analyzed through the analyzing operation (S170). The quantifying operation (S180) is performed by the quantification unit (148 of FIG. 4) of the wrinkle detection module (140 of FIG. 2). In the present embodiment, it will be described that wrinkles are divided into 10 levels, as shown in FIG. 16, by using a quantified resultant value obtained through the quantifying operation (S180).

In the expander roll controlling operation (S190), the bending degree and the rotation position (angle) in a bent state of the expander roll (110 of FIGS. 1 and 2) are adjusted in response to the degree (level) of wrinkles formed in the sheet material S to be wrinkle-removed and quantified through the quantifying operation (S180). The expander roll controlling operation (S190) is performed by controlling the operation of the roll bender 115 and the roll rotator 118 using the quantified wrinkle detection information transmitted from the wrinkle detection module 140 by using the roll controller (150 of FIG. 2). In the expander roll controlling operation (S190), the roll controller 150 adjusts the bending degree and the rotation position of the expander roll 110 so that the higher the degree of the wrinkles formed in the sheet material S to be wrinkle-removed, the larger the width expanding while the roll controller 150 passes through the expander roll 110.

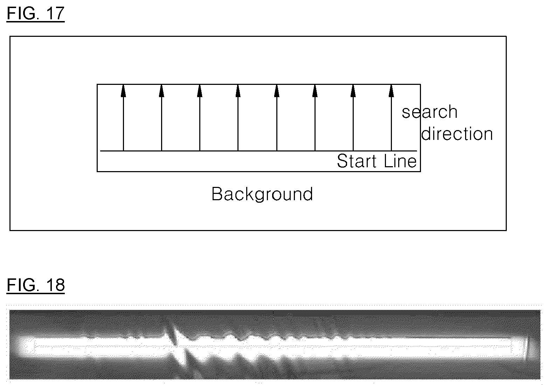

In the above-described embodiments, an example in which a sheet material to be wrinkle-removed is an electrode sheet for a secondary battery, will be described, but the present invention is not limited thereto. The sheet material to be wrinkle-removed, includes paper, a non-woven fabric, a metal foil, other films(d and the like, which also belongs to the scope of the present invention. FIGS. 17 and 18 illustrate the case where the sheet material to be wrinkle-removed is an aluminum foil that is a type of a metal foil. FIG. 17 is a view for describing an algorithm for detecting lines of wrinkles from a template image, and an edge area of an object to be analyzed is separated based on a strength change between an object pixel and a background pixel. FIG. 18 shows an image in which lines of wrinkles are detected from the aluminum foil, as indicated by solid lines.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An apparatus for removing wrinkles from a sheet material, the apparatus comprising:
an expander roll that rotates in a bent state with respect to a rotation axis bent to straighten and remove wrinkles formed in a sheet material being transferred to be wrinkle-removed, while supporting the sheet material to be wrinkle-removed;
a roll bender that generates a bending moment to bend the expander roll;
a roll rotator that rotates the expander roll;
a roll controller that controls an operation of the roll bender and the roll rotator;
a vision camera that photographs one surface of the sheet material being wrinkle-removed, so as to generate an input image; and
a wrinkle detection module that detects wrinkles in the sheet material to be detected, using the input image,
wherein the wrinkle detection module comprises a region of interest (ROI) confirmation unit that confirms an ROI from the input image to generate a confirmed ROI image, an analyzing unit that generates image analysis information from the confirmed ROI image, and a quantification unit that quantifies the level of wrinkles formed in the sheet material being detected and produces wrinkle level information, and the roll controller adjusts, in response to the wrinkle level information, a bending degree of the expander roll and a rotation position of the expander roll.

2. The apparatus of claim 1, wherein the analyzing unit generates an ROI binarization image by binarizing the confirmed ROI image and generates the image analysis information by analyzing the ROI binarization image.

3. The apparatus of claim 1, wherein the image analysis information comprises a number and size of wrinkles.

4. The apparatus of claim 1, further comprising a lighting light source that shines light on the sheet material to be wrinkle-removed, wherein the input image is photographed upstream from the expander roll so as to include a portion supported by the expander roll from the sheet material to be wrinkle-removed, and the lighting light source shines light on the expander roll downstream from the expander roll, and the expander roll is placed opposite to the vision camera and the lighting light source with the sheet material to be wrinkle-removed, therebetween.

5. The apparatus of claim 4, wherein the sheet material to be wrinkle-removed comprises a base sheet, and coating portions that are coated on a non-contact surface of the base sheet being not in contact with the expander roll and continuously connected in a transfer direction of the sheet material to be wrinkle-removed, and plain portions are formed on the base sheet and continuously connected in the transfer direction without the coating portions, and the confirmed ROI image is generated in the plain portions.

6. The apparatus of claim 5, wherein the sheet material to be detected is an electrode sheet for a secondary battery.

7. The apparatus of claim 5, wherein the ROI confirmation unit detects a template image from the input image, generates a separation image by separating an area including an ROI from the template image and then, generates a separation area binary image by binarizing the separation image, and generates an edge detection image formed by extracting an edge pixel from the separation area binary image.

8. The apparatus of claim 7, wherein the ROI confirmation unit generates two vertical component straight lines corresponding to both ends of the plain portions from the edge detection image and generates the confirmed ROI image by including an area between the two vertical component straight lines.

9. A method for removing wrinkles from a sheet material, the method comprising:
an input image generation operation in which a vision camera generates an input image by photographing one surface of a sheet material being transferred to be wrinkle-removed;
a region of interest (ROI) confirmation operation in which a wrinkle detection module generates a confirmed ROI image by confirming an ROI from the input image;
an analyzing operation in which the wrinkle detection module generates image analysis information from the confirmed ROI image;
a quantification operation in which the wrinkle detection module quantifies a level of wrinkles formed in the sheet material to be wrinkle-removed, using the image analysis information to generate wrinkle level information; and
an expander roll controlling operation in which a bent degree and a rotation position of an expander roll that rotates in a bent state with respect to a rotation axis bent to straighten and remove wrinkles formed in a sheet material being transferred to be wrinkle-removed, while supporting the sheet material to be wrinkle-removed, are controlled by a roll controller in response to the wrinkle level information.

10. The method of claim 9, wherein the wrinkle detection module further comprises an ROI image binarization operation in which the wrinkle detection module generates an ROI binarization image by binarizing the confirmed ROI image, and the image analysis information is generated through analysis on the ROI binarization image.

11. The method of claim 9, further comprising:
an operation in which an ROI confirmation unit detects a template image from the input image;
an operation in which the ROI confirmation unit generates a separation image by separating an area including an ROI from the template image and then, generates a separation area binary image by binarizing the separation image; and
an operation in which the ROI confirmation unit generates an edge detection image formed by extracting an edge pixel from the separation area binary image.

12. The method of claim 9, wherein the sheet material to be wrinkle-removed comprises a base sheet, and coating portions that are coated on a non-contact surface of the base sheet being not in contact with the expander roll and continuously connected in a transfer direction of the sheet material to be wrinkle-removed, and plain portions are formed on the base sheet and continuously connected in the transfer direction without the coating portions, and the confirmed ROI image is generated in the plain portions.
